Europäisches Patentamt

(19) European Patent Office

Office européen des brevets

(11) Publication number: **0 295 814 B1**

(12) **EUROPEAN PATENT SPECIFICATION**

(45) Date of publication of patent specification:
15.05.91 Bulletin 91/20

(51) Int. Cl.⁵: **B60J 7/08, B60R 13/07**

(21) Application number: **88305071.8**

(22) Date of filing: **03.06.88**

(54) Opening roof for motor vehicle.

(30) Priority: **13.06.87 GB 8713864**

(43) Date of publication of application:
**21.12.88 Bulletin 88/51**

(45) Publication of the grant of the patent:
**15.05.91 Bulletin 91/20**

(84) Designated Contracting States:
**DE FR GB**

(56) References cited:
**GB-A- 2 055 075**
**GB-A- 2 141 979**
**US-A- 3 972 558**

(73) Proprietor: **Britax Weathershields Limited**
**180 Sherlock Street**
**Birmingham B5 7EH (GB)**

(72) Inventor: **Penny, Thomas**
**24 Grace Road Millisons Wood**
**Allesley Coventry, CV5 9AT (GB)**

(74) Representative: **Hollinghurst, Antony**
**Britax Limited Patent Department**
**Chichester West Sussex PO19 2AQ (GB)**

## Description

This invention relates to an opening roof assembly for a motor vehicle of the type which includes a frame arranged to fit into an opening in the vehicle roof and a panel mounted on the frame for movement between a closed position in which it covers the opening and an open position, the frame having a flange arranged to overlie the vehicle roof surrounding the opening therein. An opening roof of this type is disclosed in GB-A-2141979.

It is also known from GB-A-2055075 to provide an opening roof of the type which is installed from below (i.e. from inside the vehicle) with a drainage channel which extends along the edge of the opening below the level of the vehicle roof in alignment with the edges of the panel when in its closed position and has an outer wall of which the bottom edge is closer to the centre of the opening than the top edge thereof, a plurality of rigid drain tube connectors extending laterally outwardly from a bottom portion of said outer wall, each connector being adapted for connection to flexible drainage tubes.

When an opening roof assembly of the type described in the first paragraph above is installed in a motor vehicle, the frame is positioned in the opening in the vehicle roof from above. The drainage channel must therefore pass through the opening during installation. If, as is commonly the case, a tubular connector is provided at each of the four corners of the frame, there is a conflict between this requirement and the requirement that the connectors should be orientated at as small an angle as possible to the horizontal in order to minimise the overall thickness of the opening roof assembly.

According to the invention, in an opening roof assembly of the type described in the first paragraph above, a drainage channel extends along the edge of the opening below the level of the vehicle roof in alignment with the edges of the panel when in its closed position and has an outer wall of which the bottom edge is closer to the centre of the opening than the top edge thereof, a plurality of rigid drain tube connectors extending laterally outwardly from a bottom portion of said outer wall so that the horizontal distance between the outer ends of drain tube connectors on opposite sides of the frame is less than the corresponding dimension of the opening in the vehicle roof, each connector being adapted for connection to flexible drainage tubes.

In one form of the invention, the outer wall has an upper downwardly extending portion connected by a horizontal portion to a lower downwardly extending portion and the drainage tube connectors are accommodated under the horizontal portion.

Alternatively, the outer wall may slope continuously ownwardly and inwardly from its upper edge to its lower edge.

An embodiment of the invention will now be described, by way of example, with reference to the accompanying drawings in which :

Figure 1 is a perspective view of the top of a motor car fitted with an opening roof in accordance with the invention, with its panel in an open position ;

Figure 2 is a cross-sectional view taken on the line 2-2 in Figure 1 but with the panel in the closed position ;

Figure 3 is a cross-sectional view taken on the line 3-3 in Figure 1 but with the panel in the closed position.

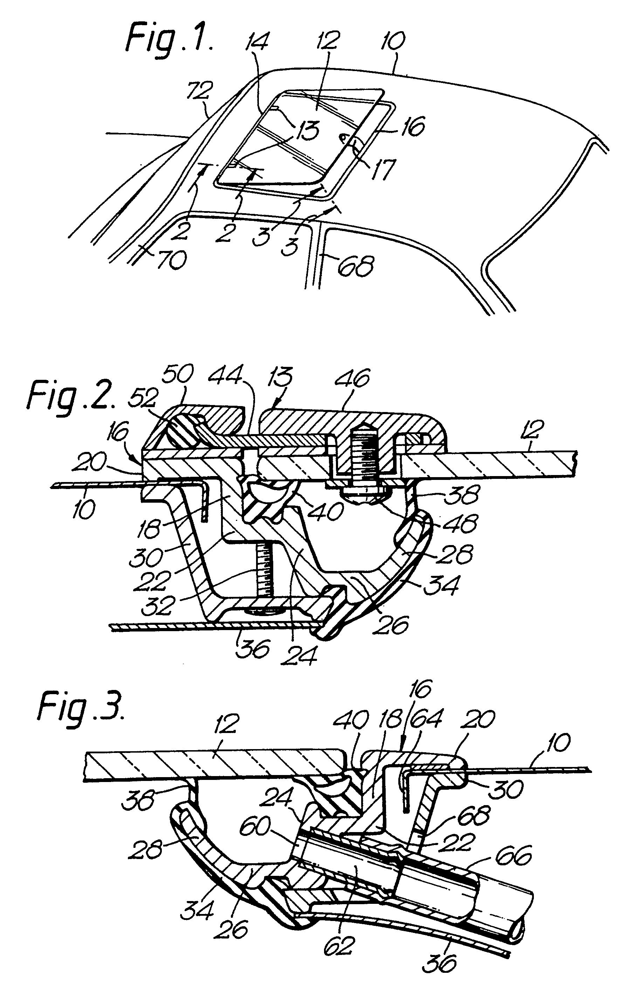

Referring to Figure 1, the roof 10 of a motor car is fitted with an opening roof assembly comprising a panel 12 hinged along its leading edge 14 to a frame 16 which bounds the opening in the roof 10. A latch 18 at the rear edge of the panel 12 is arranged to hold the panel 12 either in the normal open position, as illustrated, or in the fully closed position, and also to allow complete removal of the panel 12.

Referring to Figure 2, the frame 16 comprises a vertical upper wall portion 18 having a horizontal flange 20 projecting outwardly from its upper edge and overlying the vehicle roof 10. A horizontal wall portion 22 projects inwardly from the bottom of the vertical wall portion 18 and has the outer wall 24 of a U-shaped channel depending from its inner edge. The U-shaped channel also has a bottom wall 26 and an inner wall 28.

A generally L-shaped clamping ring 30 engages with the underside of the vehicle roof 10 below the flange 20, and with the bottom of the frame 16 adjacent to the junction between the outer wall 24 and the bottom wall 26 of the U-shaped channel. The clamping ring 30 is held in position by screws 32 which engage in tapped holes in the lower surface of the horizontal portion 22 of the frame 16.

An elastomeric member 34 engages around the top of the inner wall 28 of the U-shaped channel and around the inner end of the clamping ring 30. At the bottom, the member 34 serves as a retainer for the edge of the vehicle headliner trim 36. At its upper end, the member 34 has a projection 38 which serves as a lip seal to engage with the underside of the panel 12. A second seal (40), which engages with the bottom corner of the edge of the panel 12, is received in a channel formation on the top surface of the horizontal portion 22 of the frame 16.

Each of the hinges 18 has a metal blade 44 which is clamped to the top of the panel 12 by a clamp member 46 which has a raised formation projecting through a hole in the panel 12 for engagement by a screw 48. The blade 44 has an upwardly curved forward end which engages under a crook-like formation on a member 50 secured to the frame 16. A cylindrical rubber buffer member 52 engages with the front end of the blade 44 to prevent rattling. This type of hinge enables the panel 12 to be removed from the frame if desired.

Turning now to Figure 3, a hole 60 extends through the wall 24. The outer end of the hole 60 is of enlarged diameter and has a rigid tubular connector 62 secured therein. The free end of the connector 62 projects under the horizontal portion 22 of the frame and terminates level with the edge 64 of the opening in the vehicle roof. A flexible plastics drain tube 66 engages over the free end of the connector 62 and projects through an opening 68 in the clamping ring 30. The tube 66 is then fed down through the adjacent B-post 68 (Figure 1) of the motor car so as to discharge below the car body. Similar drain tubes extend from each of the other three corners of the frame, the tubes from the front two corners extending down through the A-posts 70 and 72 and the drain tube from the other rear corner extending down through the other B-post (not shown).

During installation of the opening roof assembly, the frame 16 is positioned in the opening in the vehicle roof from above. Since the distance between the ends of diagonally opposite drainage connectors 62 is not greater than the corresponding diagonal dimension of the roof opening, this movement is not obstructed thereby. The drain tubes 66 can then be fitted and the clamping ring 30 secured to the frame.

## Claims

1. An opening roof assembly for a motor vehicle including a frame (16) arranged to fit into an opening in the vehicle roof (10) and a panel (12) mounted on the frame (16) for movement between a closed position in which it covers the opening and an open position, the frame (16) having a flange (20) arranged to overlie the vehicle roof (10) surrounding the opening therein, characterised in that a drainage channel (26) extends along the edge of the opening below the level of the vehicle roof (10) in alignment with the edges of the panel (12) when in its closed position and has an outer wall (18, 24) of which the bottom edge (24) is closer to the centre of the opening than the top edge thereof, a plurality of rigid drain tube connectors (62) extending laterally outwardly from a bottom portion of said outer wall (18, 24) so that the horizontal distance between the outer ends of drain tube connectors (62) on opposite sides of the frame (16) is less than the corresponding dimension of the opening in the vehicle roof (10), each connector being adapted for connection to flexible drainage tubes (66).

2. An opening roof assembly according to claim 1, wherein the outer wall has an upper downwardly extending portion (18) connected by a horizontal portion (22) to a lower downwardly extending portion (24) and the drainage tube connectors (62) are accommodated under the horizontal portion (22).

3. An opening roof assembly according to claim 1, wherein the outer wall slopes continuously ownwardly and inwardly from its upper edge to its lower edge.

## Ansprüche

1. Dachöffnungsanordnung für ein Kraftfahrzeug, umfassend einen in eine Öffnung in dem Fahrzeugdach (10) eingepaßten Rahmen (16) und eine Platte, die an dem Rahmen (16) für eine Bewegung zwischen einer geschlossenen Stellung, in der sie die Öffnung abdeckt, und einer geöffneten Stellung montiert ist, wobei der Rahmen (16) einen Flansch (20) aufweist, der auf dem Fahrzeugdach um die in diesem befindliche Öffnung herum liegt, dadurch **gekennzeichnet**, daß sich ein Abflußkanal (26) entlang des Öffnungsrandes unterhalb der Ebene des Fahrzeugdachs (10) in Ausrichtung mit den Rändern der Platte (12) in deren geschlossener Stellung erstreckt und eine Außenwand (18, 24) aufweist, deren unterer Rand (24) der Mitte der Öffnung näher liegt als ihr oberer Rand, daß sich von einem Bodenbereich der Außenwand (18, 14) aus mehrere starre Abflußrohrverbinder (62) seitlich nach außen erstrecken, so daß der horizontale Abstand zwischen den äußeren Enden der Abflußrohrverbinder (72) an gegenüberliegenden Seiten des Rahmens (16) kleiner ist als die entsprechende Abmessung der Öffnung in dem Fahrzeugdach (10), wobei jeder Verbinder für den Anschluß an flexible Abflußrohre (66) ausgebildet ist.

2. Dachöffnungsanordnung nach Anspruch 1, bei der die Außenwand einen oberen, sich nach unten erstrekkenden Abschnitt (18) aufweist, der durch einen horizontalen Abschnitt (22) mit einem unteren, sich nach unten erstreckenden Abschnitt (24) verbunden ist, und die Abflußrohrverbinder (62) unter dem horizontalen Abschnitt (22) angeordnet sind.

3. Dachöffnungsanordnung nach Anspruch 1, bei der die Außenwand von ihrem oberen Rand zu ihrem unteren Rand hin kontinuierlich nach unten und nach innen abgeschrägt ist.

## Revendications

1. Un ensemble de toit ouvrant pour un véhicule automobile comprenant un cadre (16) destiné a venir s'adapter dans une ouverture ménagée dans le toit du véhicule (10) et un panneau (12) monté sur le cadre (16) pour se déplacer entre une position fermée dans laquelle il couvre l'ouverture et une position ouverte, le cadre (16) ayant un rebord (20) disposé pour s'étendre sur le toit du véhicule (10) entourant l'ouverture de celui-ci, caractérisé en ce qu'un canal de drainage (26) s'étend le long du bord de l'ouverture sous le niveau du toit du véhicule (10) en alignement avec les bords du panneau (12) lorsqu'il est dans sa position fermée et présente une paroi extérieure (18, 24) dont le bord de fond (24) est plus près du centre de l'ouverture que le bord de dessus, une pluralité de tubes de liaison d'évacuation rigide (62) s'étendant latéralement vers l'extérieur à partir d'une partie de fond de ladite paroi extérieure (18, 24) de telle sorte que la distance horizontale entre les extrémités extérieures des tubes de liaison d'évacuation (62) sur les cotés opposés du cadre (16) soit inférieure à la dimension correspondante de l'ouverture dans le toit du véhicule (10), chaque tube de liaison étant adapté pour assurer le raccordement avec les tubes d'évacuation flexibles (66).

2. Un ensemble de toit ouvrant selon la revendication 1, dans lequel la paroi extérieure a une partie supérieure s'étendant vers le bas (18) reliée par une partie horizontale (22) à une partie inférieure s'étendant vers le bas (24) et les tubes de liaison d'évacuation (62) sont disposés sous la partie horizontale (22).

3. Un ensemble de toit ouvrant selon la revendication 1, dans lequel la paroi extérieure est en pente continue s'avançant vers l'intérieur à partir de son bord supérieur vers son bord inférieur.

Fig.1.

Fig.2.

Fig.3.